# EUROPEAN PATENT APPLICATION

(11) **EP 4 428 077 A2**
(43) Date of publication of application: **11.09.2024**
(21) Application number: 24155305.6
(22) Date of filing: 01.02.2024
(51) Int. Cl.: B65H 31/26, B65H 45/18, B65H 31/02, B65H 31/38

(54) **POST-PROCESSING DEVICE AND CORRESPONDING IMAGE FORMING APPARATUS**

(30) Priority: 09.03.2023 JP 2023036732; 27.03.2023 JP 2023050217; 13.09.2023 JP 2023148272; 25.09.2023 JP 2023160231; 26.09.2023 JP 2023163181
(71) Applicant: FUJIFILM Business Innovation Corp., Minato-ku Tokyo (JP)
(72) Inventor: KAWANO, Koji, Yokohama-shi, Kanagawa (JP); FUKAMACHI, Takayuki, Yokohama-shi, Kanagawa (JP); FUKUI, Eri, Yokohama-shi, Kanagawa (JP); MIZUNO, Yuki, Yokohama-shi, Kanagawa (JP); IZUMI, Ryota, Yokohama-shi, Kanagawa (JP)
(74) Representative: Kurig, Thomas

(57) **Abstract**

A post-processing device (10) includes: a loading section (20) that has a loading surface (22) directed obliquely upward and in which a recording medium (P) is loaded on the loading surface in a state where one end (P2) of the recording medium is directed downward; a supporting section (50) that supports the one end of the recording medium loaded on the loading surface; a transporting section (30) that is provided at a position facing an upper portion of the loading surface and that transports the recording medium downward toward the loading surface; and a pushing section (70) that pushes a non-facing surface (P6) of the recording medium, which is opposite to a facing surface (P5) facing toward the loading surface, toward the loading surface to move the recording medium toward the loading surface, in a contact state where a part of the recording medium transported by the transporting section on a side of the one end (P2) comes into contact with the loading surface and a part of the recording medium on a side of an upper end (P1) is separated from the loading surface and comes into contact with the transporting section.

## Description

### BACKGROUND OF THE INVENTION

### (i) Field of the Invention

The present invention relates to a post-processing device and an image forming apparatus.

### (ii) Description of Related Art

JP1999-322163A discloses a sheet processing device that binds a plurality of sheets at a binding position, folds the sheets in half at a folding position, and ejects the sheets. The sheet processing device has a driving rotation body that is capable of driven rotation, a sheet transporting section that has a movable rotation body displaceable between a pressing position for driven rotation and a separation position separated from the driving rotation body by pressing the sheets through the driving rotation body, and a supporting section that is disposed closer to the downstream side in the sheet transport direction than the sheet transporting section and that supports an end portion of the sheet in a case where the sheet is transported to the binding position. The movable rotation body is displaced to the separation position, immediately before the end portion of the sheet transported by the sheet transporting section comes into contact with the supporting section.

### SUMMARY OF THE INVENTION

As the post-processing device, a post-processing device is conceivable, which includes a loading section that has a loading surface directed obliquely upward and in which a recording medium is loaded on the loading surface in a state where one end of the recording medium is directed downward, a supporting section that supports the one end of the recording medium loaded on the loading surface, and a transporting section that is provided at a position facing toward an upper portion of the loading surface and that transports the recording medium downward toward the loading surface.

In the post-processing device, in a case where the upper end of the recording medium transported by the transporting section is pushed toward the loading surface to move the recording medium toward the loading surface, the upper end of the recording medium may be damaged.

An object of the present disclosure is to suppress damage to the recording medium, as compared with a case where the upper end of the recording medium transported by the transporting section is pushed toward the loading surface to move the recording medium toward the loading surface.

According to a first aspect of the present disclosure, there is provided a post-processing device including: a loading section that has a loading surface directed obliquely upward and in which a recording medium is loaded on the loading surface in a state where one end of the recording medium is directed downward; a supporting section that supports the one end of the recording medium loaded on the loading surface; a transporting section that is provided at a position facing an upper portion of the loading surface and that transports the recording medium downward toward the loading surface; and a pushing section that pushes a non-facing surface of the recording medium, which is opposite to a facing surface facing toward the loading surface, toward the loading surface to move the recording medium toward the loading surface, in a contact state where a part of the recording medium transported by the transporting section on a side of the one end comes into contact with the loading surface and a part of the recording medium on a side of an upper end is separated from the loading surface and comes into contact with the transporting section.

According to a second aspect of the present disclosure, in the first aspect, the pushing section may be positioned at a non-contact position at which the pushing section is not in contact with the recording medium until the transporting section transports the recording medium downward toward the loading surface and attains the contact state, and may move from the non-contact position and may push the non-facing surface of the recording medium toward the loading surface, after the recording medium is in the contact state.

According to a third aspect of the present disclosure, in the second aspect, the pushing section may return to the non-contact position after pushing the non-facing surface of the recording medium toward the loading surface.

According to a fourth aspect of the present disclosure, in the second or third aspect, after the recording medium is in the contact state, the pushing section may move in a direction, in which the pushing section approaches the loading surface while being displaced upward from the non-contact position, to push the non-facing surface of the recording medium toward the loading surface.

According to a fifth aspect of the present disclosure, in any one of the second to fourth aspects, after the recording medium is in the contact state, the pushing section may move from the non-contact position, may push the non-facing surface of the recording medium toward the loading surface, and may stop at a predetermined stop position, and as the number of loaded recording media which is loaded on the loading surface increases, the stop position may be separated from the loading surface.

According to a sixth aspect of the present disclosure, in any one of the first to fifth aspects, the post-processing device may further include an abutting section, in which the pushing section may move the recording medium toward the loading surface and may then come into contact with the non-facing surface of the recording medium loaded on the loading surface to restrict bending of the recording medium, and the abutting section may abut the one end of the recording medium against the supporting section by pushing the upper end of the recording medium downward, in a state where the pushing section restricts bending of the recording medium.

According to a seventh aspect of the present disclosure, in the sixth aspect, in a state where the recording medium is movable in a direction of pushing performed by the abutting section, the pushing section may come into contact with the non-facing surface to restrict bending of the recording medium.

According to an eighth aspect of the present disclosure, in the seventh aspect, a gap between the loading surface and the facing surface facing toward the loading surface in the pushing section being in contact with the non-facing surface may be greater than a thickness of all of recording media loaded on the loading surface.

According to a ninth aspect of the present disclosure, in the eighth aspect, the pushing section may increase the gap as the number of loaded recording media which is loaded on the loading surface increases.

According to a tenth aspect of the present disclosure, there is provided an image forming apparatus including: an image forming section that forms an image on a recording medium; and the post-processing device according to any one of the first to ninth aspects that executes post-processing on the recording medium on which the image forming section forms the image.

In the configuration according to the first aspect of the present disclosure, as compared with a case where the upper end of the recording medium transported by the transporting section is pushed toward the loading surface to move the recording medium toward the loading surface, damage to the recording medium is suppressed.

In the configuration according to the second aspect of the present disclosure, as compared with a case where the pushing section is consistently positioned at a contact position at which the transporting section comes into contact with the recording medium to be transported, trouble in transporting of the recording medium transported by the transporting section is suppressed.

In the configuration according to the third aspect of the present disclosure, as compared with a case where the pushing section is kept at the position after pushing the non-facing surface of the recording medium toward the loading surface, trouble in transporting of the recording medium transported by the transporting section is suppressed.

In the configuration according to the fourth aspect of the present disclosure, as compared with a case where the pushing section moves in a direction in which the pushing section approaches the loading surface while the position in the up-down direction remains constant from the non-contact position, bending of the recording medium moved to the loading surface is suppressed.

In the configuration according to the fifth aspect of the present disclosure, as compared with the case where the stop position of the pushing section is consistently the same position, even in a case where the number of loaded recording media which is loaded on the loading surface increases, trouble in movement of the recording medium toward the loading surface is suppressed.

In the configuration according to the sixth aspect of the present disclosure, as compared with a case where the recording medium loaded on the loading surface is in a freely bendable state, trouble in abutting of one end of the recording medium against the supporting section is suppressed.

In the configuration according to the seventh aspect of the present disclosure, as compared with the case where the pushing section comes into contact with the non-facing surface to restrict bending of the recording medium in a state where the recording medium is unable to move along the direction of pushing performed by the abutting section, in a case where the abutting section pushes the upper end of the recording medium downward, buckling of the recording medium on the upper end side is suppressed.

In the configuration according to the eighth aspect of the present disclosure, as compared with a case where the gap between the loading surface and the facing surface facing toward the loading surface in the pushing section being in contact with the non-facing surface is the same as the thickness of all of the recording media loaded on the loading surface, in a case where the abutting section pushes the upper end of the recording medium downward, buckling of the recording medium on the upper end side is suppressed.

In the configuration according to the ninth aspect of the present disclosure, as compared with a case where the gap between the loading surface and the facing surface of the pushing section being in contact with the non-facing surface is consistently constant, even in a case where the number of loaded recording media which is loaded on the loading surface increases, buckling of the recording medium on the upper end side is suppressed.

In the configuration according to the tenth aspect of the present disclosure, as compared with a case where the upper end of the recording medium on which the image is formed and which is transported by the transporting section is pushed toward the loading surface to move the recording medium toward the loading surface, damage to the recording medium is suppressed.

### BRIEF DESCRIPTION OF THE DRAWINGS

Exemplary embodiment(s) of the present invention will be described in detail based on the following figures, wherein:
Fig. 1 is a schematic diagram showing an image forming apparatus according to a present exemplary embodiment;
Fig. 2 is an enlarged schematic diagram showing a part of a post-processing device according to the present exemplary embodiment;
Fig. 3 is a schematic diagram showing a state where a pushing section pushes a recording medium in the configuration shown in Fig. 2;
Fig. 4 is a schematic diagram showing a state where the recording medium is loaded on a loading surface in the configuration shown in Fig. 3;
Fig. 5 is an enlarged side view showing a part of the post-processing device according to the present exemplary embodiment;
Fig. 6 is a perspective view showing an example of a specific configuration of the pushing section and a moving mechanism according to the present exemplary embodiment;
Fig. 7 is a front view showing an example of a specific configuration of the pushing section and the moving mechanism according to the present exemplary embodiment;
Fig. 8 is a schematic diagram showing a state before executing of folding processing in a post-processing section according to the present exemplary embodiment;
Fig. 9 is a schematic diagram showing a state where the folding processing is executed in the post-processing section according to the present exemplary embodiment; and
Fig. 10 is a schematic diagram showing a state where the recording medium is bent such that the upper end of the recording medium faces toward the right side in the configuration shown in Fig. 5.

### DETAILED DESCRIPTION OF THE INVENTION

An example of an exemplary embodiment of the present invention will be described below with reference to the drawings.

### <Image Forming Apparatus 100>

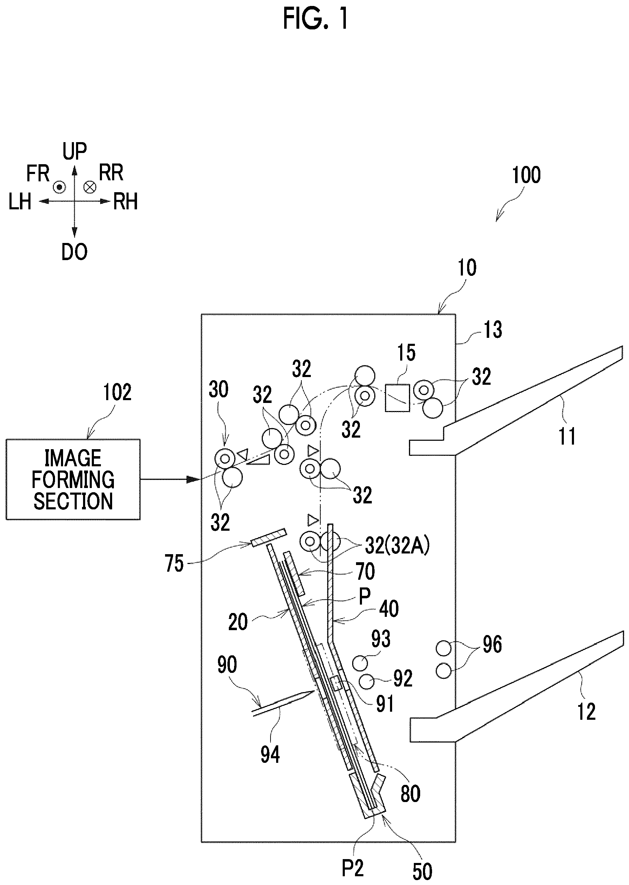

First, a configuration of an image forming apparatus 100 according to the present exemplary embodiment will be described. Fig. 1 is a schematic diagram showing the configuration of the image forming apparatus 100 according to the present exemplary embodiment.

An arrow UP shown in the drawing indicates an upper side of the apparatus, and an arrow DO indicates a lower side of the apparatus. Further, an arrow LH shown in the drawing indicates a left side of the apparatus and an arrow RH indicates a right side of the apparatus. Furthermore, an arrow FR shown in the drawing indicates a front side of the apparatus and an arrow RR indicates a rear side of the apparatus. Since these directions are directions determined for the sake of convenience of description, the configuration of the apparatus is not limited by these directions. It should be noted that regarding each of the directions relating to the apparatus, the term "apparatus" may be omitted. That is, for example, "the upper side of the apparatus" may simply be described as "the upper side."

Also, in the following description, the term "up-down direction" may be used to mean "both of an upward direction and a downward direction" or "any one of the upward direction or the downward direction". A term "right-left direction" may be used to mean "both of a rightward direction and a leftward direction" or "any one of the rightward direction or the leftward direction". It should be noted that the "right-left direction" may also be referred to as a lateral direction, a transverse direction, and a horizontal direction. A term "front-rear direction" may be used to mean "both of a forward direction and a rearward direction" or "any one of the forward direction or the rearward direction". It should be noted that the "front-rear direction" may also be referred to as a lateral direction, a transverse direction, and a horizontal direction. Further, the up-down direction, the right-left direction, and the front-rear direction are directions that intersect each other (specifically, directions orthogonal to each other).

Further, a symbol in which "×" is in "o" in the drawings means an arrow from the front to the back of the sheet surface. Furthermore, a symbol in which "•" is in "∘" in the drawings means an arrow from the back to the front of the sheet surface. Moreover, dimensional ratios of parts shown in the respective drawings in the up-down direction, the right-left direction, and the front-rear direction may differ from actual dimensional ratios.

The image forming apparatus 100 shown in Fig. 1 is an apparatus that forms an image on a recording medium P, and includes an image forming section 102 and a post-processing device 10 as shown in Fig. 1. Hereinafter, each section of the image forming apparatus 100 (specifically, the image forming section 102 and the post-processing device 10) will be described.

### <Image Forming Section 102>

The image forming section 102 shown in Fig. 1 is a constituent section that forms an image on the recording medium P. For example, an electrophotographic image forming section that forms an image on the recording medium P using toner is used as the image forming section 102.

In the electrophotographic image forming section, for example, each step of charging, exposure, development, transfer, and fixing is performed to form an image on the recording medium P. Specifically, as the electrophotographic image forming section, for example, each step of charging, exposure, development, and transfer can be performed to form an image on a transfer body, the image can be transferred from the transfer body to the recording medium P, and then the image can be fixed on the recording medium P to form an image on the recording medium P.

An example of the image forming section is not limited to the electrophotographic image forming section described above and may be, for example, an inkjet image forming section, and various image forming sections can be used. In the inkjet image forming section, for example, an ink droplet is ejected from a discharge section to the recording medium P to form an image on the recording medium P.

### <Post-Processing Device 10>

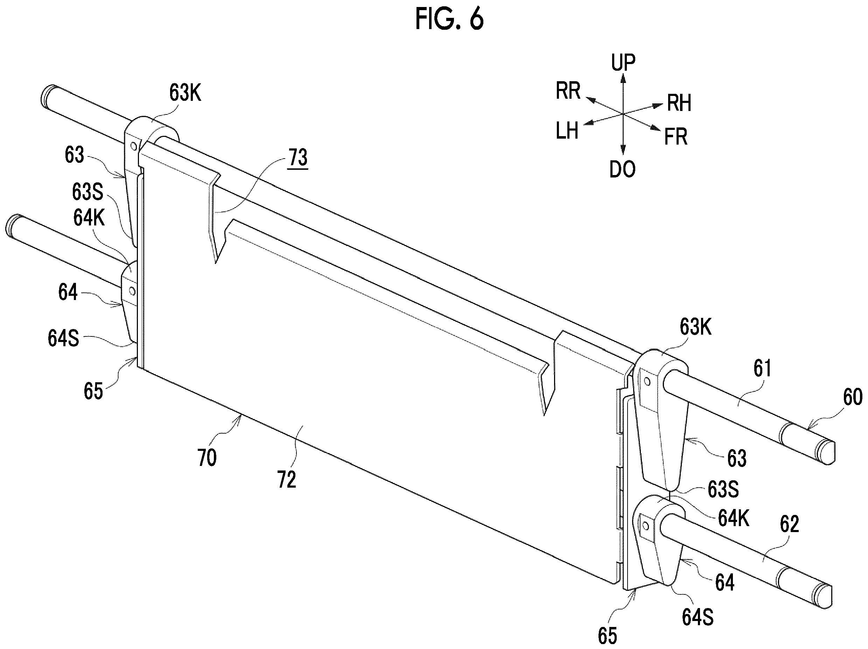

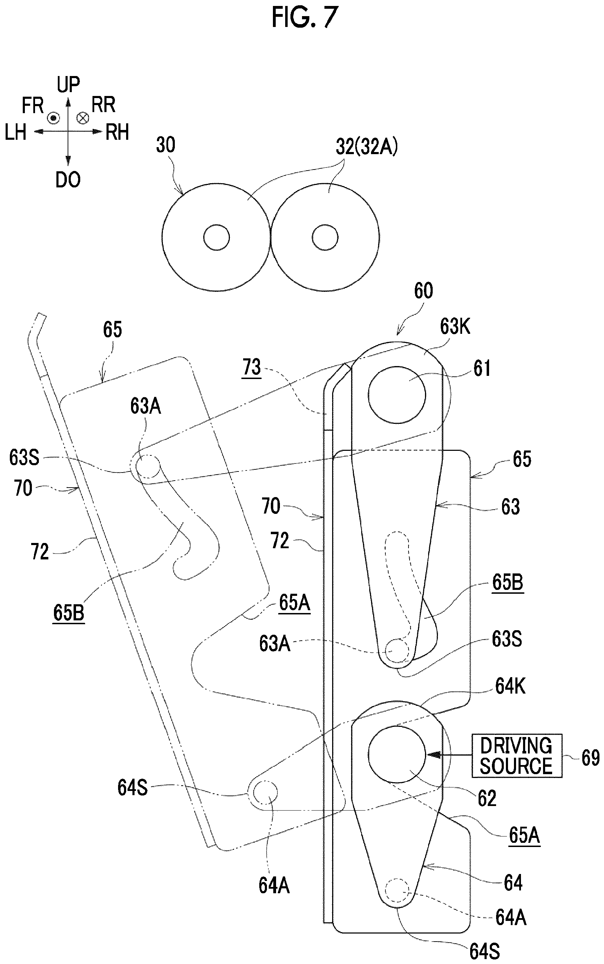

The post-processing device 10 shown in Fig. 1 is a device that executes post-processing on the recording medium P on which the image forming section 102 forms an image. Specifically, as shown in Fig. 1, the post-processing device 10 includes a post-processing device body 13, a first ejection section 11, a second ejection section 12, a post-processing section 15, a loading section 20, a transporting mechanism 30, a guiding section 40, a supporting section 50, a pushing section 70, a moving mechanism 60 (refer to Figs. 6 and 7), an abutting section 75, an aligning section 80, and a post-processing section 90. Hereinafter, description will be given of the sections of the post-processing device 10 (specifically, the post-processing device body 13, the first ejection section 11, the second ejection section 12, the post-processing section 15, the loading section 20, the transporting mechanism 30, the guiding section 40, the supporting section 50, the pushing section 70, the moving mechanism 60, the abutting section 75, the aligning section 80, and the post-processing section 90).

### <Post-Processing Device Body 13, First Ejection Section 11, Second Ejection Section 12, and Post-Processing Section 15>

The post-processing device body 13 shown in Fig. 1 is a part in which the constituent sections of the post-processing device 10 are provided. Specifically, the post-processing device body 13 is configured to include a housing formed in a box-like shape (for example, a substantially rectangular parallelepiped shape).

In the present exemplary embodiment, as shown in Fig. 1, for example, the post-processing section 15, the loading section 20, the transporting mechanism 30, the guiding section 40, the supporting section 50, the pushing section 70, and the moving mechanism 60 (refer to Figs. 6 and 7), the abutting section 75, the aligning section 80, and the post-processing section 90 are provided inside the post-processing device body 13. The first ejection section 11 and the second ejection section 12 are provided on the right side surface of the post-processing device body 13.

The first ejection section 11 is disposed at an upper portion on a right side surface of the post-processing device body 13. The recording medium P, of which the post-processing has been executed by the post-processing section 15, is ejected to the first ejection section 11.

Here, the post-processing is processing executed on the recording medium P on which the image is formed. As the post-processing executed by the post-processing section 15, there is binding processing of binding a plurality of recording media P with a stapler. It should be noted that the post-processing is not limited to the binding processing. The post-processing may be, for example, cutting processing of cutting the recording medium P, drilling processing of making a hole in the recording medium P, or the like, and may be processing executed on the recording medium P on which an image is formed.

The second ejection section 12 is a lower portion on the right side surface of the post-processing device body 13 and is disposed under the first ejection section 11. The recording medium P that has been post-processed by the post-processing section 90 to be described later is ejected to the second ejection section 12.

### <Loading Section 20>

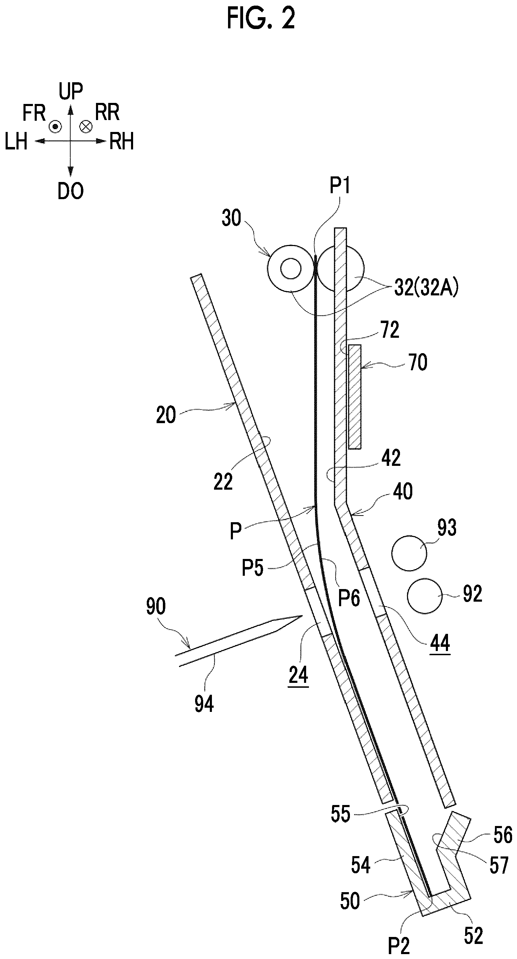

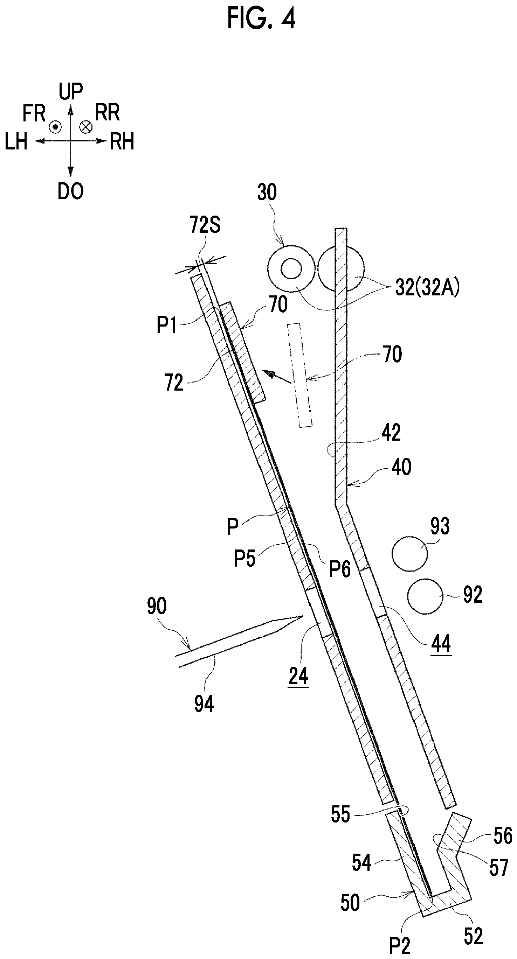

The loading section 20 shown in Figs. 1 and 2 is a constituent section on which the recording medium P is loaded. In the present exemplary embodiment, as shown in Fig. 2, the loading section 20 is configured to have a plate body which extends obliquely upward (toward the obliquely upper left side, in the present exemplary embodiment) in a normal cross-sectional view. The loading section 20 has a loading surface 22 that is directed obliquely upward (toward the obliquely upper right side, in the present exemplary embodiment). In the loading section 20, the recording medium P is loaded on the loading surface 22 in a state where one end (hereinafter, referred to as a lower end P2) of the recording medium P faces downward (refer to Fig. 4). The loading section 20 is formed with a passage hole 24 through which the push-in portion 94 to be described later passes.

### <Transporting Mechanism 30 and Guiding Section 40>

The transporting mechanism 30 shown in Fig. 1 is a mechanism that transports the recording medium P to the loading section 20. In the present exemplary embodiment, the transporting mechanism 30 selectively transports the recording medium P to one of the first ejection section 11 and the loading section 20.

Specifically, as shown in Fig. 1, the transporting mechanism 30 is configured to include a plurality of transporting rollers 32. Among the plurality of transporting rollers 32, the transporting rollers 32A are provided at a position facing toward the upper portion of the loading surface 22, and transport the recording medium P downward toward the loading surface 22. The transporting rollers 32A are an example of the transporting section.

The guiding section 40 shown in Figs. 1 and 2 is a constituent section that guides the recording medium P transported by the transporting rollers 32A. In the present exemplary embodiment, as shown in Fig. 2, the guiding section 40 is configured by using a plate body which extends obliquely upward (toward the obliquely upper left side, in the present exemplary embodiment) in a normal cross-sectional view. The guiding section 40 has a guiding surface 42 that is directed obliquely downward (toward the obliquely lower left side, in the present exemplary embodiment) and faces toward the loading surface 22. In the guiding section 40, the guiding surface 42 guides the recording medium P to the loading surface 22. The guiding section 40 is formed with a passage hole 44 through which the push-in portion 94 to be described later passes.

### <Supporting Section 50>

The supporting section 50 shown in Figs. 1 and 2 is a constituent section that supports the lower end P2 of the recording medium P loaded on the loading surface 22. As shown in Figs. 1 and 2, the supporting section 50 is disposed on the obliquely lower right side with respect to the loading section 20. As shown in Fig. 2, the supporting section 50 has an abutting part 52, a loading part 54, and a guiding part 56.

The abutting part 52 abuts against the lower end P2 of the recording medium P loaded on the loading surface 22 and supports the lower end P2. In a plurality of recording media P loaded on the loading surface 22, the lower end P2 is aligned by abutting the lower end P2 against the abutting part 52.

The loading part 54 is loaded with a lower portion of the recording medium P to which the lower end P2 is abutted against the abutting part 52. The loading part 54 has a loading surface 55 that is directed obliquely upward (toward the obliquely upper right side, in the present exemplary embodiment). The loading surface 55 is disposed on the obliquely lower right side with respect to the loading surface 22 of the loading section 20 and is disposed along the loading surface 22.

The guiding part 56 guides the lower end P2 of the recording medium P guided by the guiding section 40 to the abutting part 52 side. The guiding part 56 has a guiding surface 57 facing toward the loading surface 55. In the guiding part 56, the guiding surface 57 guides the recording medium P to the abutting part 52.

### <Pushing Section 70 and Moving Mechanism 60>

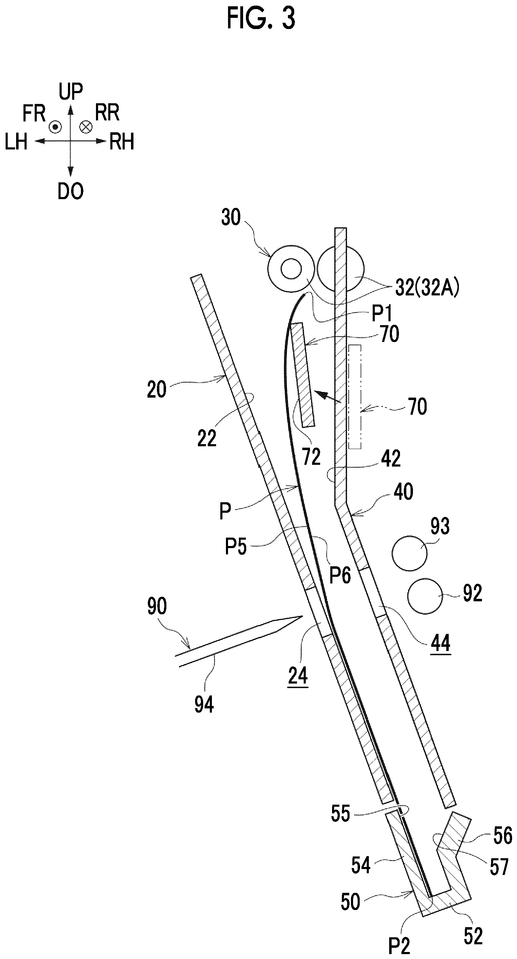

The pushing section 70 shown in Figs. 1 and 2 is a constituent section that pushes the recording medium P, which is transported by the transporting rollers 32A, toward the loading surface 22 and moves the recording medium P to the loading surface 22 (refer to Fig. 3). Further, the pushing section 70 is a constituent section that comes into contact with the recording medium P loaded on the loading surface 22 to restrict bending of the recording medium P (refer to Fig. 4). The pushing section 70 is an example of a restricting section.

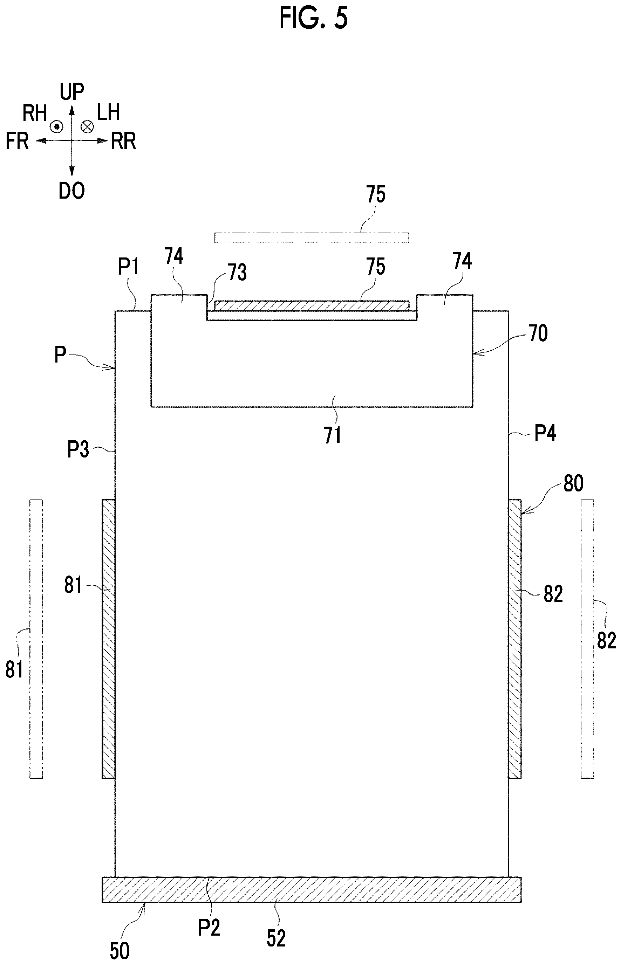

Specifically, as shown in Figs. 6 and 7, the pushing section 70 is configured by using a plate body which extends in the up-down direction and of which the thickness direction is set as the right-left direction (refer to the solid line in Fig. 7). The pushing section 70 has a facing surface 72 which faces toward the loading surface 22 of the loading section 20. The facing surface 72 constitutes a flat surface which comes into contact with the recording medium P. As shown in Figs. 5 and 6, a notch 73 into which the abutting section 75 is able to enter is formed at the upper end of the pushing section 70. Specifically, the pushing section 70 has a body portion 71 that comes into contact with the recording medium P loaded on the loading surface 22 downward from the upper end P1 and a pair of protruding portions 74 that protrude upward from each of the front side part and the rear side part of the body portion 71. It should be noted that Figs. 6 and 7 are detailed views each showing an example of a specific configuration of the pushing section 70 and the moving mechanism 60.

The moving mechanism 60 shown in Figs. 6 and 7 is a mechanism which moves the pushing section 70 between a restriction position (a position indicated by the solid line in Fig. 4 and a position indicated by the two-dot chain line in Fig. 7) and a non-contact position (a position shown in Fig. 2 and a position indicated by the solid line in Fig. 7)). Specifically, as shown in Figs. 6 and 7, the moving mechanism 60 has a first shaft portion 61, a pair of first links 63, a pair of side plates 65, and a second shaft portion 62, a pair of second links 64, and a driving source 69 (refer to Fig. 7).

Each of the pair of side plates 65 is attached to a side of the pushing section 70 opposite to the loading surface 22 (on the right side in the present exemplary embodiment) on each of the front side and the rear side of the pushing section 70. As shown in Fig. 7, a notch 65A, into which the second shaft portion 62 enters, and a long hole 65B, through which a connecting shaft 63A is movable, are formed on the pair of side plates 65.

The first shaft portion 61 is rotatably supported by the post-processing device body 13 (refer to Fig. 1) downward with respect to the transporting rollers 32A. The second shaft portion 62 is rotatably supported by the post-processing device body 13 (refer to Fig. 1) downward with respect to the first shaft portion 61.

In each of the pair of first links 63, a base end portion 63K is fixed to the outside in the axial direction with respect to the pushing section 70 in the first shaft portion 61. Each apical end portions 63S of the pair of first links 63 are provided with the connecting shaft 63A connected to each of the pair of side plates 65 by being inserted into the long hole 65B so as to be movable in the long hole 65B.

In each of the pair of second links 64, a base end portion 64K is fixed to the outside in the axial direction with respect to the pushing section 70 in the second shaft portion 62. Each apical end portion 64S of the pair of second links 64 is provided with a connecting shaft 64A which is rotatably connected to each of the pair of side plates 65.

The driving source 69 is configured by using, for example, a driving motor (for example, a stepping motor) that rotationally drives the second shaft portion 62. The driving source 69 is able to control the rotation position of the second shaft portion 62. As the driving source 69, the first shaft portion 61 may be rotationally driven in cell of or in addition to the rotation driving of the second shaft portion 62.

In the moving mechanism 60, the driving source 69 rotates the second shaft portion 62 between a first rotation position (refer to the solid line in Fig. 7) and a second rotation position (refer to the two-dot chain line in Fig. 7). At the first rotation position of the second shaft portion 62, the apical end portions 63S of the pair of first links 63 are positioned under the base end portions 63K, and the apical end portions 64S of the pair of second links 64 are positioned under the base end portions 64K. Further, at the first rotation position of the second shaft portion 62, the second shaft portion 62 is positioned in the notch 65A, and the connecting shaft 63A of the pair of first links 63 is positioned at the lower end of the long hole 65B. Then, in the moving mechanism 60, the pushing section 70 is positioned at the non-contact position, at the first rotation position of the second shaft portion 62.

On the other hand, at the second rotation position of the second shaft portion 62, the apical end portions 63S of the pair of first links 63 are positioned on the obliquely lower left side with respect to the base end portion 63K, and the apical end portions 64S of the pair of second links 64 are positioned on the obliquely lower left side with respect to the base end portion 64K. In the present exemplary embodiment, the apical end portions 63 S and 64S at the second rotation position are positioned on the left side and the upper side with respect to the apical end portions 63 S and 64S at the first rotation position.

Further, at the second rotation position of the second shaft portion 62, the second shaft portion 62 is positioned outside the notch 65A, and the connecting shaft 63A of the pair of first links 63 is positioned at the upper end of the long hole 65B. Then, in the moving mechanism 60, the pushing section 70 is positioned at the restriction position, at the second rotation position of the second shaft portion 62.

### <Movement Operation of Pushing Section 70>

In the present exemplary embodiment, as described above, the pushing section 70 can be moved by the moving mechanism 60 between the restriction position (the position indicated by the solid line in Fig. 4 and the position indicated by the two-dot chain line in Fig. 7) and the non-contact position (the position shown in Fig. 2 and the position indicated by the solid line in Fig. 7).

The pushing section 70 (refer to Fig. 2) is not in contact with the recording medium P transported toward the loading surface 22 at the non-contact position. The non-contact position is also a position at which the pushing section 70 is separated from the transport path of the recording medium P transported to the loading surface 22. In the present exemplary embodiment, as shown in Fig. 2, the pushing section 70 is positioned on the side of the guiding section 40 opposite to the loading section 20 (on the right side in the present exemplary embodiment) at the non-contact position.

In a process of moving the pushing section 70 from the non-contact position (refer to Fig. 2) to the restriction position (refer to Fig. 4) through the moving mechanism 60, as shown in Fig. 3, the pushing section 70 pushes a non-facing surface P6 of the recording medium P toward the loading surface 22 to move the recording medium P to the loading surface 22.

Specifically, in a contact state of the recording medium P transported by the transporting rollers 32A, the pushing section 70 pushes the non-facing surface P6 of the recording medium P toward the loading surface 22 to move the recording medium P to the loading surface 22.

In the above-mentioned contact state, a part of the recording medium P transported by the transporting rollers 32A on the lower end P2 side is in contact with the loading surface 22, and a part of the recording medium P on the upper end P1 side is separated from the loading surface 22 and is in contact with the transporting rollers 32A (refer to Fig. 3). In the present exemplary embodiment, specifically, in the contact state, a part of the recording medium P on the upper end P1 side is sandwiched between the transporting rollers 32A. The non-facing surface P6 of the recording medium P is a surface of the recording medium P that is opposite to a facing surface P5 facing toward the loading surface 22.

Further, in the present exemplary embodiment, the pushing section 70 is positioned at a non-contact position at which the pushing section 70 is not in contact with the recording medium P until the transporting rollers 32A transport the recording medium P obliquely downward toward the loading surface 22 and attain the contact state, and moves from the non-contact position and pushes the non-facing surface P6 of the recording medium P toward the loading surface 22, after the recording medium P is in the contact state.

More specifically, after the recording medium P is in the contact state, the pushing section 70 is displaced upward from the non-contact position, moves, in a state where the facing surface 72 is along the loading surface 22, in a direction, in which the pushing section 70 approaches the loading surface 22, to push the non-facing surface P6 of the recording medium P toward the loading surface 22, and stops at a predetermined stop position (for example, the restriction position). In the present exemplary embodiment, as the number of loaded recording media P loaded on the loading surface 22 increases, the stop position is separated from the loading surface 22. The movement operation of the pushing section 70 is realized by moving the connecting shaft 63A of the pair of first links 63 in the long hole 65B. In other words, the shape of the long hole 65B is set such that the pushing section 70 executes the above-mentioned movement operation.

The pushing section 70 (refer to Fig. 4) moves the recording medium P to the loading surface 22 and then comes into contact with the non-facing surface P6 of the recording medium P loaded on the loading surface 22 to restrict bending of the recording medium P. Specifically, the pushing section 70 comes into contact with the highest recording medium P among the plurality of recording media P loaded on the loading surface 22 to restrict bending of the recording medium P (refer to Fig. 1).

In such a manner, as shown in Figs. 3, 4, and 7, the pushing section 70 moves in a state where the facing surface 72 is along the loading surface 22, in a direction in which the pushing section 70 approaches the loading surface while being displaced upward from the non-contact position 22. Then, the pushing section 70 comes into contact with the recording medium P to restrict bending of the recording medium P.

At the restriction position, the pushing section 70 comes into contact with the recording medium P in a state where the recording medium P loaded on the loading surface 22 is movable along the direction of pushing (toward the obliquely lower right side, in the present exemplary embodiment) performed by the abutting section 75. As a result, the pushing section 70 restricts bending of the recording medium P. Specifically, at the restriction position of the pushing section 70, a gap 72S (refer to Fig. 4) between the loading surface 22 and the facing surface 72 of the pushing section 70, which is in contact with the recording medium P, is greater than a thickness of all of the recording media P loaded on the loading surface 22.

Further, as shown in Figs. 4 and 5, at the restriction position, the pushing section 70 comes into contact with the recording medium P in a state of protruding upward from the upper end P1 of the recording medium P. Then, the pushing section 70 comes into contact with the recording medium P to restrict bending. Specifically, as shown in Fig. 5, the pushing section 70 comes into contact with the recording medium P in a state where the pair of protruding portions 74 protrude upward from the upper end P1 of the recording medium P. In the state, the upper end P1 of the recording medium P is exposed between the pair of protruding portions 74, and an approach path into which the abutting section 75 is able to enter is formed between the pair of protruding portions 74. As described above, in the present exemplary embodiment, at the restriction position, the pushing section 70 comes into contact with the recording medium P in a state where a part of the pushing section 70 protrudes upward from the upper end P1 of the recording medium P, thereby restricting bending of the recording medium P.

In the moving mechanism 60, the driving source 69 stops the second shaft portion 62 on the first rotation position side with respect to the second rotation position as the number of loaded recording media P loaded on the loading surface 22 increases. That is, the pushing section 70 increases the gap 72S as the number of loaded recording media P loaded on the loading surface 22 increases.

The pushing section 70 pushes the non-facing surface P6 of the recording medium P toward the loading surface 22, then restricts bending of the recording medium P at the restriction position of the recording medium P, and thereafter returns to the non-contact position. Specifically, the pushing section 70 returns to the non-contact position after each end portion of the recording medium P is aligned by the abutting section 75 and the aligning section 80.

### <Abutting Section 75>

As shown in Fig. 5, the abutting section 75 pushes the upper end P1 of the recording medium P downward in a state where the pushing section 70 restricts bending of the recording medium P (hereinafter, referred to as a state of restriction performed by the pushing section 70), and abuts the lower end P2 against the supporting section 50. Thereby, the upper end P1 of the recording medium P (in other words, the position of the recording medium P in the up-down direction) is aligned.

In the present exemplary embodiment, the abutting section 75 moves from a non-contact position (the position indicated by the two-dot chain line in Fig. 5) that is not in contact with the recording medium P transported toward the loading surface 22, and pushes the upper end P1 of the recording medium P downward. The non-contact position is a position on the outside (specifically, the upper side) of the notch 73 of the pushing section 70. Further, the non-contact position is also a position at which the abutting section 75 is separated from the transport path of the recording medium P transported to the loading surface 22. In addition, the abutting section 75 returns to the non-contact position after the lower end P2 of the recording medium P is abutted against the supporting section 50.

Further, the abutting section 75 comes into contact with the upper end P1 of the recording medium P in a state of entering the notch 73 of the pushing section 70. It should be noted that the upper end P1 is an end portion of the recording medium P opposite to the lower end P2.

### <Aligning Section 80>

The aligning section 80 shown in Figs. 1 and 5 is a constituent section that aligns the side ends of the recording medium P by coming into contact with the side ends of both sides of the recording medium P in a state of the restriction performed by the pushing section 70. As shown in Fig. 5, the aligning section 80 has a first aligning portion 81 and a second aligning portion 82.

In the aligning section 80, the first aligning portion 81 comes into contact with a side end (hereinafter, referred to as a front end P3) of one side (front side in the present exemplary embodiment) of the recording medium P, and the second aligning portion 82 comes into contact with a side end (hereinafter, referred to as the rear end P4) of the other side (rear side in the present exemplary embodiment) of the recording medium P. Thereby, the side ends of the recording medium P (in other words, positions of the recording medium P in the front-rear direction) are aligned.

In the present exemplary embodiment, each of the first aligning portion 81 and the second aligning portion 82 moves from non-contact positions (indicated by the two-dot chain lines in Fig. 5), at which the first aligning portion 81 and the second aligning portion 82 are not in contact with the recording medium P transported toward the loading surface 22, and comes into contact with each of the side ends (specifically, the front end P3 and the rear end P4) of the recording medium P. The non-contact position is also a position at which each of the first aligning portion 81 and the second aligning portion 82 is separated from the transport path of the recording medium P transported to the loading surface 22. In addition, the aligning section 80 returns to the non-contact position after aligning the side ends of the recording medium P. In the present exemplary embodiment, each time the transporting rollers 32A transport the recording medium P to the loading surface 22, the above-mentioned movement operation of the pushing section 70, the above-mentioned abutting operation performed by the abutting section 75, and the above-mentioned alignment performed by the aligning section 80 are executed. Thereby, the plurality of recording media P are loaded on the loading surface 22 in a state of being aligned in the up-down direction and the front-rear direction.

### <Post-Processing Section 90>

The post-processing section 90 shown in Fig. 1 is a constituent section that executes the post-processing on the recording medium P loaded on the loading surface 22. In the present exemplary embodiment, the post-processing section 90 executes, as the post-processing, processing of binding the plurality of recording media P and folding the plurality of recording media P.

As shown in Fig. 1, the post-processing section 90 includes a binding portion 91, a pair of folding rollers 92 and 93, a push-in portion 94, and transporting rollers 96. The binding portion 91 is a so-called stapler, and the plurality of recording media P are bound by striking a needle at central portions of the plurality of recording media P loaded on the loading surface 22 in the up-down direction.

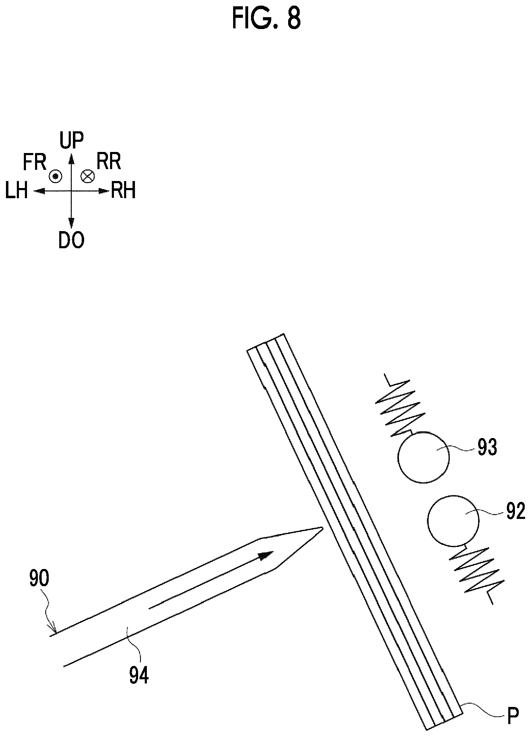

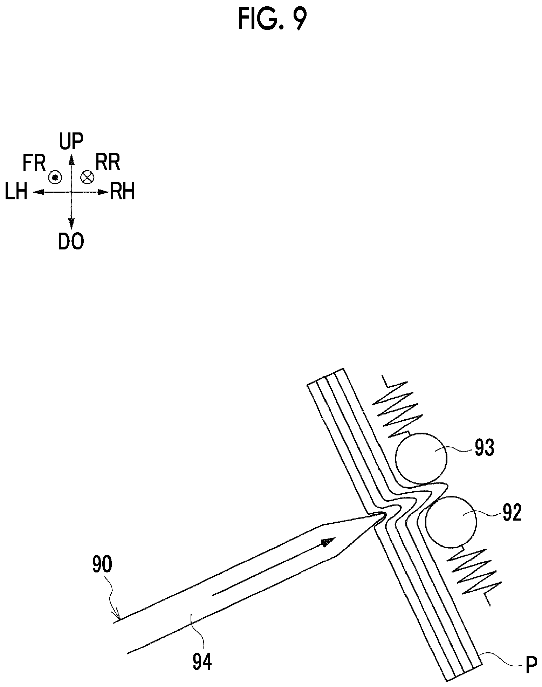

The pair of folding rollers 92 and 93 are disposed side by side along the obliquely upper left side on the obliquely upper right side with respect to the passage hole 44 of the guiding section 40. The folding roller 92 rotates in the clockwise direction in Figs. 8 and 9, and the folding roller 93 rotates in the counterclockwise direction in Figs. 8 and 9.

The push-in portion 94 is formed in a tapered shape of which a length is longer than the length of the recording medium P loaded on the loading surface 22 in the front-rear direction and of which the apical end portion is tapered.

As shown in Figs. 8 and 9, the push-in portion 94 moves toward the obliquely upper right side in a direction orthogonal to the loading surface 22, pushes the apical end portion thereof into a central portion, which is a fold part in the plurality of recording media P loaded on the loading surface 22, in the up-down direction, and pushes the central portion into a gap between the pair of folding rollers 92 and 93, thereby sandwiching the plurality of recording media P between the pair of folding rollers 92 and 93 and folding the plurality of recording media P.

By rotating the pair of folding rollers 92 and 93, the folded recording medium P is transported to the transporting rollers 96. Further, the transporting rollers 96 transport the plurality of recording media P folded by the pair of folding rollers 92 and 93 and the push-in portion 94, and ejects the recording medium P to the second ejection section 12.

The post-processing executed by the post-processing section 90 is not limited to the above-mentioned processing. As the post-processing, for example, only one of binding processing of binding the plurality of recording media P and folding processing of folding the plurality of recording media P may be performed. Further, the post-processing may be cutting processing of cutting the recording medium P, drilling processing of making a hole in the recording medium P, or the like, and may be processing executed on the recording medium P on which an image is formed.

### <Action of Present Exemplary Embodiment>

In the present exemplary embodiment, as described above, in a contact state of the recording medium P transported by the transporting rollers 32A, the pushing section 70 pushes the non-facing surface P6 of the recording medium P toward the loading surface 22 to move the recording medium P to the loading surface 22.

Here, the pushing section 70 may push the upper end P1 of the recording medium P, which is transported by the transporting rollers 32A, toward the loading surface 22 and may move the recording medium P to the loading surface 22 (hereinafter, referred to as a form A). In such a case, the upper end P1 of the recording medium P may be damaged. In the form A, in a case where, for example, a flexible member (for example, a rubber member) is used as the pushing section 70 in order to suppress damage to the upper end P1 of the recording medium P, the degree of freedom in material selection is reduced, and the durability of the pushing section 70 is reduced.

In contrast, in the present exemplary embodiment, as described above, in the contact state of the recording medium P transported by the transporting rollers 32A, the non-facing surface P6 of the recording medium P is pushed toward the loading surface 22, and the recording medium P is moved to the loading surface 22. Therefore, damage to the recording medium P is suppressed, as compared with the form A. Further, according to the present exemplary embodiment, it is less necessary to consider damage to the upper end P1 of the recording medium P. Therefore, as compared with the form A, the degree of freedom in material selection of the pushing section 70 is high, and a material having a high durability can be selected as the material of the pushing section 70.

Further, in the present exemplary embodiment, the pushing section 70 is positioned at a non-contact position at which the pushing section 70 is not in contact with the recording medium P until the transporting rollers 32A transport the recording medium P obliquely downward toward the loading surface 22 and attain the contact state, and moves from the non-contact position and pushes the non-facing surface P6 of the recording medium P toward the loading surface 22, after the recording medium P is in the contact state.

For this reason, as compared with a case where the pushing section 70 is consistently positioned at a contact position at which the transporting rollers 32A come into contact with the recording medium P transported by the transporting rollers 32A, trouble in transporting of the recording medium P transported by the transporting rollers 32A are suppressed.

Further, in the present exemplary embodiment, the pushing section 70 pushes the non-facing surface P6 of the recording medium P toward the loading surface 22, then restricts bending of the recording medium P at the restriction position of the recording medium P, and thereafter returns to the non-contact position.

For this reason, as compared with the case where the pushing section 70 is kept at the restriction position, trouble in transporting of the recording medium P transported by the transporting rollers 32A is suppressed.

Further, in the present exemplary embodiment, after the recording medium P is in the contact state, the pushing section 70 moves in a direction in which the pushing section 70 approaches the loading surface 22 while being displaced upward from the non-contact position. Thereby, the pushing section 70 pushes the non-facing surface P6 of the recording medium P toward the loading surface 22.

Therefore, as compared with a case where the pushing section 70 moves in a direction in which the pushing section 70 approaches the loading surface 22 while the position in the up-down direction remains constant from the non-contact position, the upper end P1 of the recording medium P that has moved to the loading surface 22 is suppressed from being bent rightward.

Further, in the present exemplary embodiment, after the recording medium P is in the contact state, the pushing section 70 moves in a direction in which the pushing section 70 approaches the loading surface 22 while being displaced upward from the non-contact position. Thereby, the pushing section 70 pushes the non-facing surface P6 of the recording medium P toward the loading surface 22, and stops at a predetermined stop position. Furthermore, in the present exemplary embodiment, as the number of loaded recording media P loaded on the loading surface 22 increases, the stop position is separated from the loading surface 22.

For this reason, as compared with a case where the stop positions of the pushing sections 70 are consistently at the same position, even in a case where the number of loaded recording media which is loaded on the loading surface increases, trouble in movement of the recording medium toward the loading surface is suppressed.

In the present exemplary embodiment, as shown in Fig. 5, the abutting section 75 pushes the upper end P1 of the recording medium P downward and abuts the lower end P2 against the supporting section 50 in a state of the restriction performed by the pushing section 70.

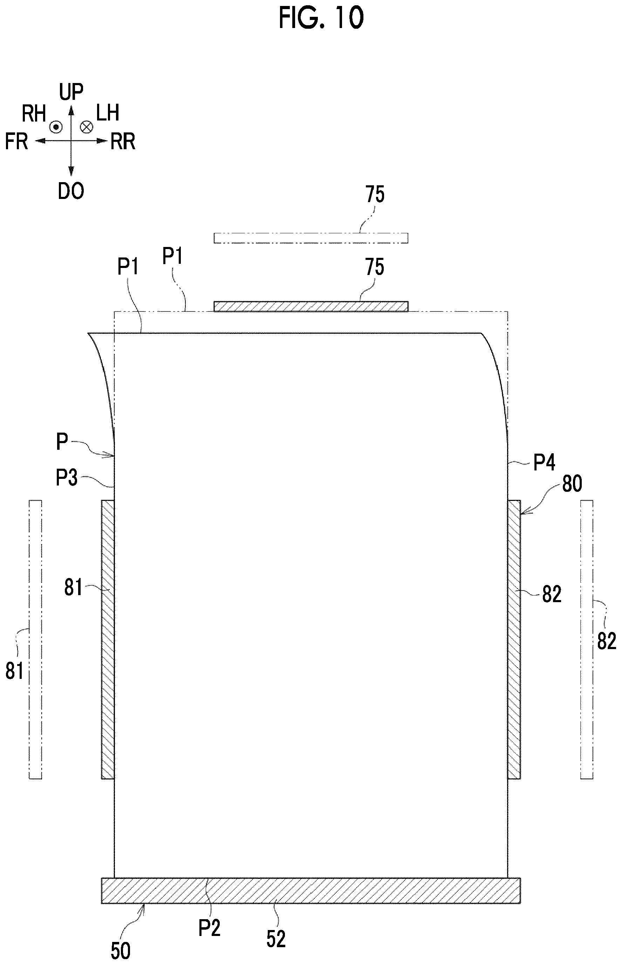

Here, in a case where the recording medium P loaded on the loading surface 22 is in a freely bendable state (hereinafter, referred to as a form B), as shown in Fig. 10, the recording medium P is bent such that the upper end P1 of the recording medium P may be directed rightward. In such a case, the position of the upper end P1 is lowered. Thus, the abutting section 75 may not be able to push the upper end P1 of the recording medium P downward, and may not be able to abut the lower end P2 of the recording medium P against the supporting section 50.

In contrast, in the present exemplary embodiment, as described above, the abutting section 75 pushes the upper end P1 of the recording medium P downward and abuts the lower end P2 against the supporting section 50 in the state of the restriction performed by the pushing section 70. Therefore, as compared with the form B, trouble in abutting of the lower end P2 of the recording medium P against the supporting section 50 is suppressed.

Further, in the present exemplary embodiment, the pushing section 70 comes into contact with the recording medium P in a state where the recording medium P loaded on the loading surface 22 is movable along the direction of pushing (toward the obliquely lower right side, in the present exemplary embodiment) performed by the abutting section 75. As a result, the pushing section 70 restricts bending of the recording medium P.

For this reason, as compared with a case where the movement of the recording medium P along the direction of pushing (toward the obliquely lower right side, in the present exemplary embodiment) performed by the abutting section 75 is restricted, in a case where the abutting section 75 pushes the upper end P1 of the recording medium P downward, buckling of the recording medium P on the upper end P1 side (specifically, a part of the recording medium P upward from the pushing section 70) is suppressed.

Further, in the present exemplary embodiment, the gap 72S (refer to Fig. 4) between the loading surface 22 and the facing surface 72 of the pushing section 70, which is in contact with the recording medium P, is greater than a thickness of all of the recording media P loaded on the loading surface 22.

Therefore, as compared with a case where the gap 72S is the same as the thickness of all of the recording media P loaded on the loading surface 22, the recording medium P is easily moved in the direction of pushing performed by the abutting section 75 (toward the obliquely lower right side, in the present exemplary embodiment). In addition, in a case where the abutting section 75 pushes the upper end P1 of the recording medium P downward, buckling of the recording medium P on the upper end P1 side is suppressed.

Further, in the present exemplary embodiment, the pushing section 70 increases the gap 72S as the number of loaded recording media P loaded on the loading surface 22 increases.

Therefore, as compared with a case where the gap 72S is consistently constant, even in a case where the number of loaded recording media P loaded on the loading surface 22 increases, the recording medium P is easily moved in the direction of pushing performed by the abutting section 75 (toward the obliquely lower right side, in the present exemplary embodiment). In addition, in a case where the abutting section 75 pushes the upper end P1 of the recording medium P downward, buckling of the recording medium P on the upper end P1 side is suppressed.

### <Modification Example>

In the present exemplary embodiment, the transporting rollers 32A are used as an example of the transporting section. However, the present invention is not limited thereto. As the example of the transporting section, for example, a transport belt, a transport drum, or the like may be used, and any constituent section that is able to transport the recording medium P may be used.

Further, in the present exemplary embodiment, in the contact state, a part of the recording medium P transported by the transporting rollers 32A on the lower end P2 side is in contact with the loading surface 22, and a part of the recording medium P on the upper end P1 side is separated from the loading surface 22 and is sandwiched between the transporting rollers 32A. However, the present invention is not limited thereto. For example, the upper end P1 of the recording medium P may come out of the transporting rollers 32A, and a part of the recording medium P on the upper end P1 side may come into contact with the transporting rollers 32A. Further, in a case where a transport belt, a transport drum, or the like is used as an example of the transporting section, in the contact state, a part of the recording medium P transported by the transporting rollers 32A on the lower end P2 side comes into contact with the loading surface 22, and a part of the recording medium P on the upper end P1 side is separated from the loading surface 22 and is in contact with the transporting section.

Further, in the present exemplary embodiment, the pushing section 70 has a pushing function of pushing the recording medium P, which is transported by the transporting rollers 32A, toward the loading surface 22 to move the recording medium P to the loading surface 22, and has a restricting function of coming into contact with the recording medium P loaded on the loading surface 22 to restrict bending of the recording medium P. However, the present invention is not limited thereto. For example, the pushing section 70 may have a configuration in which only the pushing function is provided and a constituent section other than the pushing section 70 has the restricting function.

Further, in the present exemplary embodiment, the gap 72S (refer to Fig. 4) is greater than the thickness of all of the recording media P loaded on the loading surface 22. However, the present invention is not limited thereto. For example, the gap 72S may be configured to have the same thickness as all of the recording media P loaded on the loading surface 22.

Further, in the present exemplary embodiment, the gap 72S is increased in the pushing section 70 as the number of loaded recording media P loaded on the loading surface 22 increases. However, the present invention is not limited thereto. For example, the gap 72S may be configured to be consistently constant.

Further, in the present exemplary embodiment, the pushing section 70 is positioned at a non-contact position at which the pushing section 70 is not in contact with the recording medium P until the transporting rollers 32A transport the recording medium P obliquely downward toward the loading surface 22 and attain the contact state, and moves from the non-contact position and pushes the non-facing surface P6 of the recording medium P toward the loading surface 22, after the recording medium P is in the contact state. However, the present invention is not limited thereto. For example, the pushing section 70 may be configured to be consistently positioned at a contact position at which the transporting rollers 32A come into contact with the recording medium P transported.

Further, in the present exemplary embodiment, the pushing section 70 pushes the non-facing surface P6 of the recording medium P toward the loading surface 22, then restricts bending of the recording medium P at the restriction position of the recording medium P, and thereafter returns to the non-contact position. However, the present invention is not limited thereto. For example, in a case where the pushing section 70 does not have the restricting function, the pushing section 70 may be configured to return to the non-contact position after pushing the non-facing surface P6 of the recording medium P toward the loading surface 22.

In this configuration as well, trouble in transporting of the recording medium P transported by the transporting rollers 32A is suppressed, as compared with a case where the pushing section 70 is kept at the position, after pushing the non-facing surface P6 of the recording medium P toward the loading surface 22.

Further, in the present exemplary embodiment, as shown in Figs. 3 and 4, the pushing section 70 moves from the non-contact position at which the pushing section 70 is not in contact with the recording medium P transported toward the loading surface 22, and comes into contact with the recording medium P to restrict bending of the recording medium P. However, the present invention is not limited thereto. For example, the pushing section 70 may be configured to be consistently positioned at a contact position at which the pushing section 70 comes into contact with the recording medium P transported toward the loading surface 22.

Specifically, in the present exemplary embodiment, as shown in Figs. 3, 4, and 7, the pushing section 70 moves in a direction in which the pushing section 70 approaches the loading surface 22 while being displaced upward from the non-contact position and comes into contact with the recording medium P to restrict bending of the recording medium P. However, the present invention is not limited thereto. For example, the pushing section 70 may be configured to move in a direction in which the pushing section 70 approaches the loading surface 22 while the position in the up-down direction remains constant from the non-contact position.

More specifically, in the present exemplary embodiment, as shown in Figs. 3, 4, and 7, the pushing section 70 moves, in a state where the facing surface 72 is along the loading surface 22, in a direction in which the pushing section 70 approaches the loading surface 22 while being displaced upward from the non-contact position. However, the present invention is not limited thereto. For example, even in a configuration in which the pushing section 70 moves, in a state where the facing surface 72 facing toward the loading surface 22 is tilted with respect to the loading surface 22, in a direction in which the pushing section 70 approaches the loading surface 22 while being displaced upward from the non-contact position.

Further, in the present exemplary embodiment, as shown in Figs. 4 and 5, the pushing section 70 comes into contact with the recording medium P in a state of protruding upward from the upper end P1 of the recording medium P, thereby restricting bending of the recording medium P. However, the present invention is not limited thereto. For example, the pushing section 70 may be configured to come into contact with the recording medium P in a state of being positioned under the upper end P1 of the recording medium P.

In the present exemplary embodiment, as shown in Figs. 5 and 6, a notch 73 into which the abutting section 75 is able to enter is formed at the upper end of the pushing section 70. However, the present invention is not limited thereto. For example, the upper end P1 of the pushing section 70 may be configured to be flat.

Further, in the present exemplary embodiment, the aligning section 80 comes into contact with the side ends on both sides of the recording medium P in a state of the restriction performed by the pushing section 70, thereby aligning the side ends of the recording medium P. However, the present invention is not limited thereto. For example, the aligning section 80 may be configured to come into contact with the side ends on both sides of the recording medium P in a state where the recording medium P loaded on the loading surface 22 is in a freely bendable state.

The present invention is not limited to the above-mentioned exemplary embodiment, and various modifications, changes, and improvements can be made without departing from the scope of the present invention. For example, the above-mentioned modification examples may be configured to be combined with each other as appropriate.

### <Supplementary Notes>

(((1))) A post-processing device comprising:
   a loading section that has a loading surface directed obliquely upward and in which a recording medium is loaded on the loading surface in a state where one end of the recording medium is directed downward;
   a supporting section that supports the one end of the recording medium loaded on the loading surface;
   a transporting section that is provided at a position facing an upper portion of the loading surface and that transports the recording medium downward toward the loading surface; and
   a pushing section that pushes a non-facing surface of the recording medium, which is opposite to a facing surface facing toward the loading surface, toward the loading surface to move the recording medium toward the loading surface, in a contact state where a part of the recording medium transported by the transporting section on a side of the one end comes into contact with the loading surface and a part of the recording medium on a side of an upper end is separated from the loading surface and comes into contact with the transporting section.
(((2))) The post-processing device according to (((1))),
   wherein the pushing section
   is positioned at a non-contact position at which the pushing section is not in contact with the recording medium until the transporting section transports the recording medium downward toward the loading surface and attains the contact state, and
   moves from the non-contact position and pushes the non-facing surface of the recording medium toward the loading surface, after the recording medium is in the contact state.
(((3))) The post-processing device according to (((2))),
   wherein the pushing section returns to the non-contact position after pushing the non-facing surface of the recording medium toward the loading surface.
(((4))) The post-processing device according to (((2))) or (((3))),
   wherein after the recording medium is in the contact state, the pushing section moves in a direction, in which the pushing section approaches the loading surface while being displaced upward from the non-contact position, to push the non-facing surface of the recording medium toward the loading surface.
(((5))) The post-processing device according to any one of (((2))) to (((4))),
   wherein after the recording medium is in the contact state, the pushing section moves from the non-contact position, pushes the non-facing surface of the recording medium toward the loading surface, and stops at a predetermined stop position, and
   as the number of loaded recording media which is loaded on the loading surface increases, the stop position is separated from the loading surface.
(((6))) The post-processing device according to any one of (((1))) to (((5))), further comprising an abutting section,
   wherein the pushing section moves the recording medium toward the loading surface and then comes into contact with the non-facing surface of the recording medium loaded on the loading surface to restrict bending of the recording medium, and
   the abutting section abuts the one end of the recording medium against the supporting section by pushing the upper end of the recording medium downward, in a state where the pushing section restricts bending of the recording medium.
(((7))) The post-processing device according to (((6))),
   wherein in a state where the recording medium is movable in a direction of pushing performed by the abutting section, the pushing section comes into contact with the non-facing surface to restrict bending of the recording medium.
(((8))) The post-processing device according to (((7))),
   wherein a gap between the loading surface and the facing surface facing toward the loading surface in the pushing section being in contact with the non-facing surface is greater than a thickness of all of recording media loaded on the loading surface.
(((9))) The post-processing device according to (((8))),
   wherein the pushing section increases the gap as the number of loaded recording media which is loaded on the loading surface increases.
(((10))) An image forming apparatus comprising:
   an image forming section that forms an image on a recording medium; and
   the post-processing device according to any one of (((1))) to (((9))) that executes post-processing on the recording medium on which the image forming section forms the image.

In the configuration according to (((1))), as compared with a case where the upper end of the recording medium transported by the transporting section is pushed toward the loading surface to move the recording medium toward the loading surface, damage to the recording medium is suppressed.

In the configuration according to (((2))), as compared with a case where the pushing section is consistently positioned at a contact position at which the transporting section comes into contact with the recording medium to be transported, trouble in transporting of the recording medium transported by the transporting section is suppressed.

In the configuration according to (((3))), as compared with a case where the pushing section is kept at the position after pushing the non-facing surface of the recording medium toward the loading surface, trouble in transporting of the recording medium transported by the transporting section is suppressed.

In the configuration according to (((4))), as compared with a case where the pushing section moves in a direction in which the pushing section approaches the loading surface while the position in the up-down direction remains constant from the non-contact position, bending of the recording medium moved to the loading surface is suppressed.

In the configuration according to (((5))), as compared with the case where the stop position of the pushing section is consistently the same position, even in a case where the number of loaded recording media which is loaded on the loading surface increases, trouble in movement of the recording medium to the loading surface is suppressed.

In the configuration according to (((6))), as compared with a case where the recording medium loaded on the loading surface is in a freely bendable state, trouble in abutting of one end of the recording medium against the supporting section is suppressed.

In the configuration according to (((7))), as compared with the case where the pushing section comes into contact with the non-facing surface to restrict bending of the recording medium in a state where the recording medium is unable to move along the direction of pushing performed by the abutting section, in a case where the abutting section pushes the upper end of the recording medium downward, buckling of the recording medium on the upper end side is suppressed.

In the configuration according to (((8))), as compared with a case where the gap between the loading surface and the facing surface facing toward the loading surface in the pushing section being in contact with the non-facing surface is the same as the thickness of all of the recording media loaded on the loading surface, in a case where the abutting section pushes the upper end of the recording medium downward, buckling of the recording medium on the upper end side is suppressed.

In the configuration according to (((9))), as compared with a case where the gap between the loading surface and the facing surface of the pushing section being in contact with the non-facing surface is consistently constant, even in a case where the number of loaded recording media which is loaded on the loading surface increases, buckling of the recording medium on the upper end side is suppressed.

In the configuration according to (((10))), as compared with a case where the upper end of the recording medium on which the image is formed and which is transported by the transporting section is pushed toward the loading surface to move the recording medium toward the loading surface, damage to the recording medium is suppressed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: post-processing device
11: first ejection section
12: second ejection section
13: post-processing device body
15: post-processing section
20: loading section
22: loading surface
24: passage hole
30: transporting mechanism
32, 32A: transporting roller
40: guiding section
42: guiding surface
44: passage hole
50: supporting section
52: abutting part
54: loading part
55: loading surface
56: guiding part
57: guiding surface
60: moving mechanism
61: first shaft portion
62: second shaft portion
63: first link
63A: connecting shaft
63K: base end portion
63S: apical end portion
64: second link
64A: connecting shaft
64K: base end portion
64S: apical end portion
65: side plate
65A: notch
65B: long hole
69: driving source
70: pushing section (example of restricting section)
71: body portion
72: facing surface
72S:gap
73: notch
74: protruding portion
75: abutting section
80: aligning section
81: first aligning portion
82: second aligning portion
90: post-processing section
91: binding portion
92, 93: folding roller
94: push-in portion
96: transporting roller
100: image forming apparatus
102: image forming section
P: recording medium
P1: upper end
P2: lower end
P3: front end
P4: rear end
P5: facing surface
P6: non-facing surface

## Claims

1. A post-processing device comprising:
a loading section that has a loading surface directed obliquely upward and in which a recording medium is loaded on the loading surface in a state where one end of the recording medium is directed downward;
a supporting section that supports the one end of the recording medium loaded on the loading surface;
a transporting section that is provided at a position facing an upper portion of the loading surface and that transports the recording medium downward toward the loading surface; and
a pushing section that pushes a non-facing surface of the recording medium, which is opposite to a facing surface facing toward the loading surface, toward the loading surface to move the recording medium toward the loading surface, in a contact state where a part of the recording medium transported by the transporting section on a side of the one end comes into contact with the loading surface and a part of the recording medium on a side of an upper end is separated from the loading surface and comes into contact with the transporting section.

2. The post-processing device according to claim 1,
wherein the pushing section
is positioned at a non-contact position at which the pushing section is not in contact with the recording medium until the transporting section transports the recording medium downward toward the loading surface and attains the contact state, and
moves from the non-contact position and pushes the non-facing surface of the recording medium toward the loading surface, after the recording medium is in the contact state.

3. The post-processing device according to claim 2,
wherein the pushing section returns to the non-contact position after pushing the non-facing surface of the recording medium toward the loading surface.

4. The post-processing device according to claim 2 or 3,
wherein after the recording medium is in the contact state, the pushing section moves in a direction, in which the pushing section approaches the loading surface while being displaced upward from the non-contact position, to push the non-facing surface of the recording medium toward the loading surface.

5. The post-processing device according to any one of claims 2 to 4,
wherein after the recording medium is in the contact state, the pushing section moves from the non-contact position, pushes the non-facing surface of the recording medium toward the loading surface, and stops at a predetermined stop position, and
as the number of loaded recording media which is loaded on the loading surface increases, the stop position is separated from the loading surface.

6. The post-processing device according to any one of claims 1 to 5, further comprising an abutting section,
wherein the pushing section moves the recording medium toward the loading surface and then comes into contact with the non-facing surface of the recording medium loaded on the loading surface to restrict bending of the recording medium, and
the abutting section abuts the one end of the recording medium against the supporting section by pushing the upper end of the recording medium downward, in a state where the pushing section restricts bending of the recording medium.

7. The post-processing device according to claim 6,
wherein in a state where the recording medium is movable in a direction of pushing performed by the abutting section, the pushing section comes into contact with the non-facing surface to restrict bending of the recording medium.

8. The post-processing device according to claim 7,
wherein a gap between the loading surface and the facing surface facing toward the loading surface in the pushing section being in contact with the non-facing surface is greater than a thickness of all of recording media loaded on the loading surface.

9. The post-processing device according to claim 8,
wherein the pushing section increases the gap as the number of loaded recording media which is loaded on the loading surface increases.

10. An image forming apparatus comprising:
an image forming section that forms an image on a recording medium; and
the post-processing device according to any one of claims 1 to 9 that executes post-processing on the recording medium on which the image forming section forms the image.
